# EUROPÄISCHE PATENTANMELDUNG

(11) **EP 4 768 189 A1**
(43) Veröffentlichungstag der Anmeldung: **01.07.2026**
(21) Anmeldenummer: 24223752.7
(22) Anmeldetag: 30.12.2024
(51) Int. Cl.: B25F 5/00

(54) **ELEKTROGERÄT UND VERFAHREN**

(71) Anmelder: Festool GmbH, 73240 Wendlingen (DE)
(72) Erfinder: Jandt, Anika, 73240 Wendlingen (DE); Bozler, Stefan, 73240 Wendlingen (DE); Drexler, Oliver, 73240 Wendlingen (DE)
(74) Vertreter: Patentanwälte Magenbauer & Kollegen Partnerschaft mbB

(57) **Zusammenfassung**

Die Erfindung betrifft ein Elektrogerät (1), das als Elektrowerkzeug, Sauger oder Exoskelett ausgebildet ist, umfassend: eine Antriebseinrichtung (3), eine erste Elektronikanordnung (7), die eine erste Rechnereinheit (8) zur Ausführung einer Steuerungssoftware zur Steuerung der Antriebseinrichtung (3) umfasst, einen Akku (13) zur Energieversorgung wenigstens der ersten Rechnereinheit (8), eine Schalteinrichtung (14) mit einem Schalter (15), über den ein erster Strompfad (16) von dem Akku (13) zu der ersten Rechnereinheit (8) verläuft, und eine zweite Elektronikanordnung (17), über die die Schalteinrichtung (14) mit einem Wake-Up-Signal (19) ansteuerbar ist, um das Elektrogerät (1) von einem Aus-Modus, in dem der Schalter (15) geöffnet und dadurch die erste Rechnereinheit (8) stromlos geschaltet ist, in einen Kommunikations-Modus zu versetzen, in dem der Schalter (15) geschlossen ist und dadurch die erste Rechnereinheit (8) mit Strom versorgt wird, so dass die erste Rechnereinheit (8) kommunikativ ansprechbar ist.

## Beschreibung

Die Erfindung betrifft ein Elektrogerät, das als Elektrowerkzeug, Sauger oder Exoskelett ausgebildet ist, umfassend: eine Antriebseinrichtung, eine erste Elektronikanordnung, die eine erste Rechnereinheit zur Ausführung einer Steuerungssoftware zur Steuerung der Antriebseinrichtung umfasst, einen Akku zur Energieversorgung wenigstens der ersten Rechnereinheit, und eine Schalteinrichtung mit einem Schalter, über den ein erster Strompfad von dem Akku zu der ersten Rechnereinheit verläuft.

Eine Aufgabe der Erfindung besteht darin, auf energieeffiziente Weise einen flexiblen und/oder sicheren Betrieb des Elektrogeräts zu ermöglichen.

Die Aufgabe wird gelöst durch ein Elektrogerät gemäß Anspruch 1. Das Elektrogerät umfasst eine zweite Elektronikanordnung, über die die Schalteinrichtung mit einem Wake-Up-Signal ansteuerbar ist, um das Elektrogerät von einem Aus-Modus, in dem der Schalter geöffnet und dadurch die erste Rechnereinheit stromlos geschaltet ist, in einen Kommunikations-Modus zu versetzen, in dem der Schalter geschlossen ist und dadurch die erste Rechnereinheit mit Strom versorgt wird, so dass die erste Rechnereinheit kommunikativ ansprechbar ist.

Der Kommunikations-Modus ist beispielsweise ein Modus, in dem das Elektrogerät konfigurierbar ist (insbesondere über ein externes Gerät, beispielsweise ein Mobilgerät) und/oder Kommunikationsdaten, beispielsweise Telemetriedaten, austauschen kann und/oder ein Update vornehmen kann. Im Kommunikations-Modus ist die Antriebseinrichtung vorzugsweise nicht aktiviert, insbesondere dauerhaft stromlos geschaltet. Ein Update ist beispielsweise ein Softwareupdate der Steuerungssoftware zur Steuerung der Antriebseinrichtung des Elektrowerkzeugs und/oder eine Aktualisierung von Parametern zum Betrieb des Elektrowerkzeugs.

Dadurch, dass die erste Rechnereinheit im Aus-Modus stromlos geschaltet ist und folglich keinen Strom verbrauchen kann, wird es möglich, den Energieverbrauch des Elektrogeräts im Aus-Modus sehr gering zu halten. Über die zweite Elektronikanordnung bleibt das Elektrogerät dennoch ansprechbar (insbesondere von extern, beispielsweise über Bluetooth) und/oder in der Lage, sich in den Kommunikations-Modus zu versetzen. Die zweite Elektronikanordnung wird im Aus-Modus zweckmäßigerweise in einem Energiesparmodus betrieben, in dem die zweite Elektronikanordnung weiterhin das Wake-Up-Signal bereitstellen kann. Die zweite Elektronikanordnung ist also zweckmäßigerweise im Aus-Modus nicht stromlos geschaltet. Die zweite Elektronikanordnung ist beispielsweise Teil eines Akkupacks des Elektrogeräts. Alternativ kann vorgesehen sein, dass die zweite Elektronikanordnung einem Elektrogerät-Hauptkörper zugeordnet ist, an dem der Akku abnehmbar angeordnet ist.

Eine Aktivierung bzw. Bestromung der Antriebseinrichtung ist für die Einnahme des Kommunikations-Modus vorzugsweise nicht erforderlich. Auf diese Weise kann ein sichererer Betrieb ermöglicht werden, insbesondere, wenn das Elektrogerät als Elektrowerkzeug ausgeführt ist. Insbesondere bei einem konventionellen Elektrowerkzeug kann es vorkommen, dass ein Benutzer, der das Elektrowerkzeug konfigurieren möchte (beispielsweise mittels eines Mobilgeräts, das er in einer Hand hält), und aus diesem Grund bewirken möchte, dass das Elektrowerkzeug den Aus-Modus verlässt, ein Einschalt-Bedienelement des Elektrowerkzeugs betätigt, mit dem der Antrieb des Werkzeugs (beispielsweise ein Sägeblatt) des Elektrowerkzeugs gestartet wird. Dieser Antrieb des Werkzeugs kann potentiell gefährlich sein, insbesondere, wenn der Benutzer beim Betätigen des Einschalt-Bedienelements das Mobilgerät in einer seiner Hände hält. Durch die erfindungsgemäße Lösung kann das Elektrogerät mittels des Wake-Up-Signals aufgeweckt werden, so dass es für den Benutzer nicht erforderlich ist, zum Verlassen des Aus-Modus das Einschalt-Bedienelement (z.B. das nachstehend erläuterte Antriebs-Modus-Bedienelement) zu betätigen, und somit die Antriebseinrichtung nicht aktiviert wird. Es ist für den Benutzer nicht erforderlich, zum Verlassen des Aus-Modus mit dem Elektrogerät in physischem Kontakt zu stehen.

Vorteilhafte Weiterbildungen sind Gegenstand der Unteransprüche.

Die Erfindung betrifft ferner ein Verfahren zum Betrieb des Elektrogeräts, umfassend die Schritte: mittels der zweiten Elektronikanordnung, Ansteuern der Schalteinrichtung mit dem Wake-Up-Signal, um das Elektrogerät von dem Aus-Modus in den Kommunikations-Modus zu versetzen, und, im Kommunikations-Modus, Durchführen einer Kommunikation mit der ersten Rechnereinheit.

Weitere exemplarische Details sowie beispielhafte Ausführungsformen werden nachstehend unter Bezugnahme auf die Figuren erläutert. Dabei zeigt
- Figur 1: eine schematische Darstellung eines Systems mit einem Elektrogerät gemäß einer ersten Ausführungsform,
- Figur 2: eine schematische Darstellung eines Systems mit einem Elektrogerät gemäß einer zweiten Ausführungsform,
- Figur 3: eine Anordnung aus mehreren verschiedenen Elektrogerät-Hauptkörpern, einem Akkupack und einem externen Gerät,
- Figur 4: eine Schaltung mit einer Schalteinrichtung und einer ersten Rechnereinheit,
- Figur 5: ein Schaltplan eines Elektrogeräts mit einem Akkupack, und
- Figur 6: ein Schaltplan eines Elektrogeräts mit zwei Akkupacks.

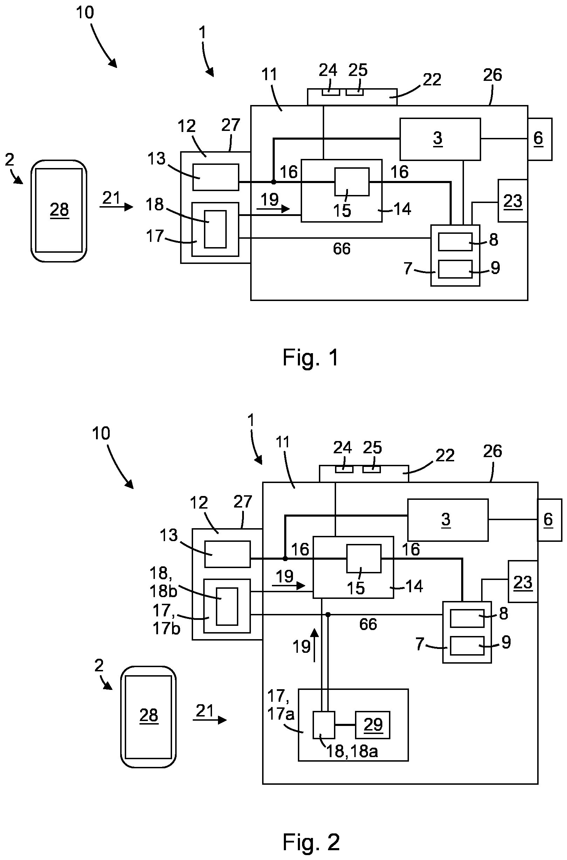

Die Figur 1 zeigt ein System 10, das ein Elektrogerät 1 und ein externes Gerät 2 umfasst. Das externe Gerät 2 ist beispielsweise als Mobilgerät oder als Zentralcomputer, beispielsweise als Cloud-Server, ausgeführt. Das Mobilgerät ist beispielsweise als Mobiltelefon, insbesondere als Smartphone, oder als Tablet ausgeführt. Das externe Gerät 2 ist vorzugsweise ein von dem Elektrogerät 1 separates Gerät.

Das System 10 stellt eine exemplarische Anwendungsumgebung für das Elektrogerät 1 dar. Das Elektrogerät 1 kann auch für sich genommen - also ohne das externe Gerät 2 - bereitgestellt sein.

Das Elektrogerät 1 ist vorzugsweise als Elektrowerkzeug, Sauger oder Exoskelett ausgebildet. In der Ausgestaltung als Elektrowerkzeug kann das Elektrogerät 1 beispielsweise als Schleifer, Hobel, Tauchsäge, Handkreissäge, Stichsäge, Schauber, Bohrmaschine oder Kantenfräse ausgeführt sein.

Bevorzugt umfasst das Elektrogerät 1 einen Elektrogerät-Hauptkörper 11 und einen abnehmbar am Elektrogerät-Hauptkörper 11 angebrachten Akkupack 12. Das Elektrogerät 1 umfasst zweckmäßigerweise ein Hauptkörper-Gehäuse 26, das das Außengehäuse des Elektrogerät-Hauptkörpers 11 bildet. Der Akkupack 12 umfasst zweckmäßigerweise ein Akkupack-Gehäuse 27, das das Außengehäuse des Akkupacks 12 bildet.

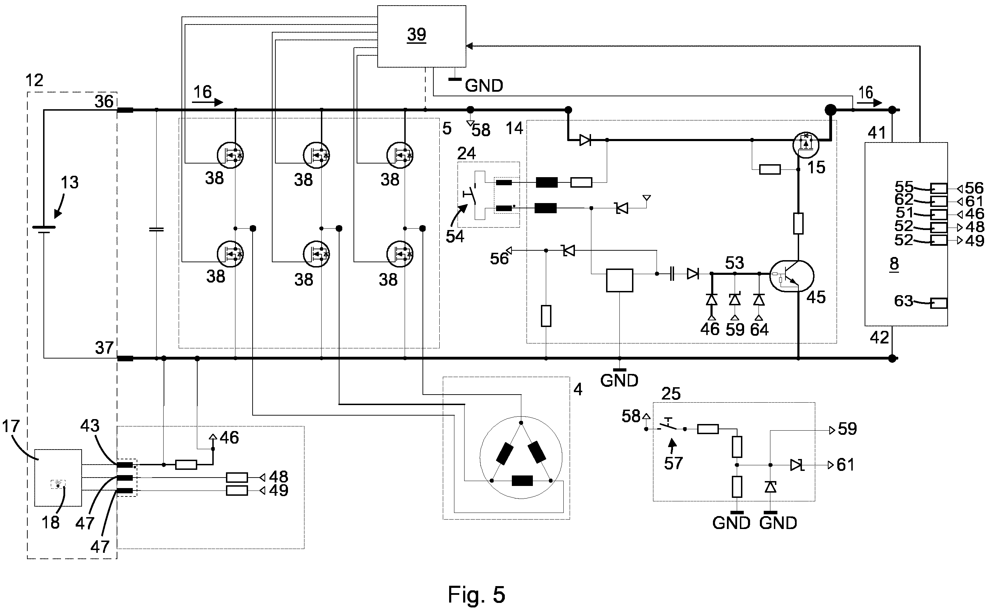

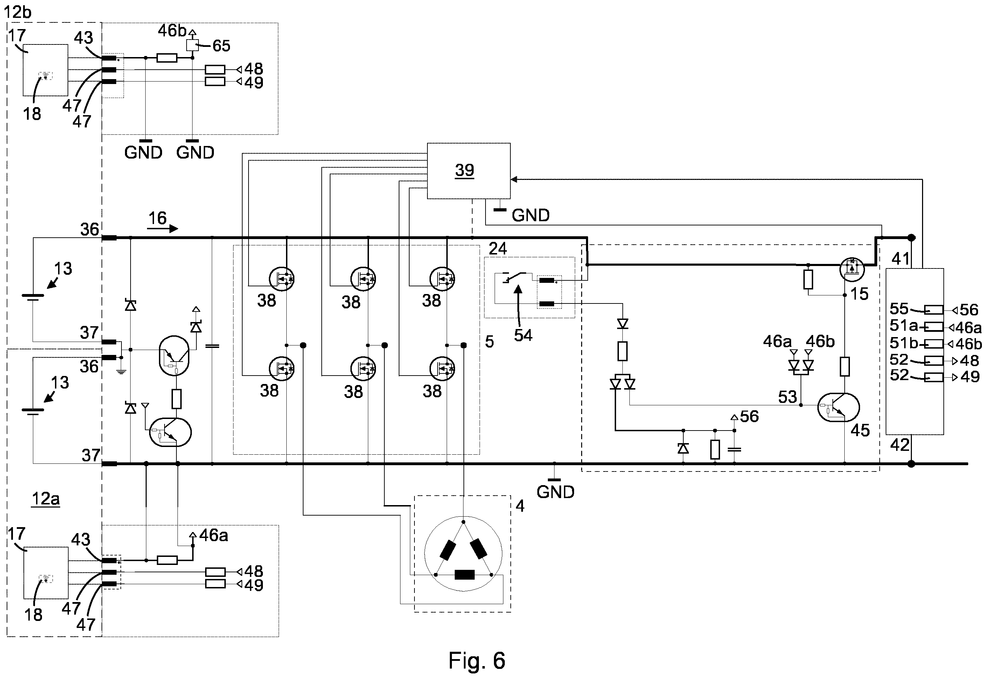

Das Elektrogerät 1 umfasst eine Antriebseinrichtung 3, die beispielsweise einen Elektromotor 4 und/oder eine Leistungselektronik 5 (siehe z.B. Figuren 5 und 6) umfassen kann. Exemplarisch verfügt das Elektrogerät 1 über ein Werkzeug 6, das mittels der Antriebseinrichtung 3 antreibbar ist. Exemplarisch ist die Antriebseinrichtung 3 Teil des Elektrogerät-Hauptkörpers 11. Das Werkzeug 6 ist zweckmäßigerweise an dem Elektrogerät-Hauptkörper 11 angeordnet oder kann Teil des Elektrogerät-Hauptkörpers 11 sein.

Das Elektrogerät 1 umfasst eine erste Elektronikanordnung 7, die eine erste Rechnereinheit 8 aufweist. Die erste Rechnereinheit 8 ist beispielsweise ein erster Microcontroller. Die erste Rechnereinheit 8 dient zur Ausführung einer Steuerungssoftware zur Steuerung der Antriebseinrichtung 3. Beispielsweise generiert die erste Rechnereinheit 8 unter Verwendung der Steuerungssoftware Steuerungssignale, mit denen die erste Rechnereinheit 8 die Antriebseinrichtung 3, insbesondere die Leistungselektronik 5, ansteuert (beispielsweise über eine Treibereinheit 39). Optional verfügt die erste Elektronikanordnung 7 über einen Speicher 9. Die erste Elektronikanordnung 7 ist exemplarisch Teil des Elektrogerät-Hauptkörpers 11.

Das Elektrogerät 1 umfasst einen Akku 13 zur Energieversorgung wenigstens der ersten Rechnereinheit 8. Bevorzugt dient der Akku 13 ferner zur Energieversorgung der Antriebseinrichtung 3. Der Akku 13 ist exemplarisch Teil des Akkupacks 12.

Das Elektrogerät 1 umfasst vorzugsweise eine Bedieneinrichtung 22, über die ein Benutzer das Elektrogerät 1 einschalten kann, um das Elektrogerät 1 in einen Antriebs-Modus zu versetzen. Gemäß einer möglichen Ausgestaltung kann der Benutzer über die Bedieneinrichtung 22 eine Beleuchtungseinheit 23 des Elektrogeräts 1 einschalten. Die Beleuchtungseinheit 23 ist beispielsweise als integrierte Leuchte ausgeführt und dient insbesondere dazu, einen Arbeitsbereich des Elektrogeräts 1 auszuleuchten. Die Bedieneinrichtung 22 umfasst beispielsweise ein Antriebs-Modus-Bedienelement 24, das durch den Benutzer betätigbar ist, um das Elektrogerät 1 in den Antriebs-Modus zu versetzen, und/oder ein Beleuchtungseinheit-Bedienelement 25, das durch den Benutzer betätigbar ist, um die Beleuchtungseinheit 23 einzuschalten. Bevorzugt ist das Antriebs-Modus-Bedienelement 24 und/oder das Beleuchtungseinheit-Bedienelement 25 außen am Hauptkörper-Gehäuse 26 angeordnet. Gemäß einer optionalen Ausgestaltung ist das Beleuchtungseinheit-Bedienelement 25 durch den Benutzer betätigbar, um das Elektrogerät 1 in einen (nachstehend näher erläuterten) Kommunikations-Modus zu versetzen (insbesondere zusätzlich zum Einschalten der Beleuchtungseinheit 23). Gemäß einer weiteren optionalen Ausgestaltung ist das Beleuchtungseinheit-Bedienelement 25 durch den Benutzer betätigbar, um das Elektrogerät 1 in den Antriebs-Modus zu versetzen (insbesondere zusätzlich zum Einschalten der Beleuchtungseinheit 23).

Das Elektrogerät 1 umfasst eine Schalteinrichtung 14 mit einem Schalter 15. Über den Schalter 15 verläuft ein erster Strompfad 16 von dem Akku 13 zu der ersten Rechnereinheit 8. Die Schalteinrichtung 14 ist nicht Teil der ersten Rechnereinheit 8 sondern separat von dieser vorhanden. Die Schalteinrichtung 14, insbesondere der Schalter 15, ist zwischen den Akku 13 und die erste Rechnereinheit 8 geschaltet. Mit dem Begriff "Schalter" ist in diesem Zusammenhang ein Bauelement gemeint, mit dem eine elektrische Verbindung wahlweise hergestellt oder getrennt werden kann. Bei einem geschlossenen Schalter ist die elektrische Verbindung hergestellt und bei einem offenen Schalter ist die elektrische Verbindung getrennt. Der Schalter 15 umfasst beispielsweise einen Transistor und/oder ist als Transistor ausgeführt. Die Schalteinrichtung 14 ist exemplarisch Teil des Elektrogerät-Hauptkörpers 11.

Das Elektrogerät 1 umfasst eine zweite Elektronikanordnung 17, die bevorzugt eine Drahtlos-Kommunikationseinheit 18 umfasst. In der Figur 1 ist das Elektrogerät 1 gemäß einer ersten Ausführungsform ausgebildet, bei der die zweite Elektronikanordnung 17 vorzugsweise Teil des Akkupacks 12 ist. Die zweite Elektronikanordnung 17 ist über eine digitale Kommunikationsverbindung 66, beispielsweise I²C, mit der ersten Rechnereinheit 8 kommunikativ verbunden.

Über die zweite Elektronikanordnung 17 ist die Schalteinrichtung 14 mit einem Wake-Up-Signal 19 ansteuerbar, um das Elektrogerät 1 von einem Aus-Modus in einen Kommunikations-Modus zu versetzen. Das Wake-Up-Signal 19 wird insbesondere von der zweiten Elektronikanordnung 17 erzeugt, exemplarisch von der Drahtlos-Kommunikationseinheit 18. In dem Aus-Modus ist der Schalter 15 geöffnet und dadurch die erste Rechnereinheit 8 stromlos geschaltet. In dem Kommunikations-Modus ist der Schalter 15 geschlossen und dadurch wird die erste Rechnereinheit 8 mit Strom versorgt, so dass die erste Rechnereinheit 8 kommunikativ ansprechbar ist, beispielsweise von der zweiten Elektronikanordnung 17. Das Elektrogerät 1 ist insbesondere über die zweite Elektronikanordnung 17 in den Kommunikations-Modus versetzbar, ohne dass dafür eine Betätigung der Bedieneinrichtung 22 erforderlich ist.

Das Wake-Up-Signal 19 kann auch als Aufwecksignal bezeichnet werden. Das Wake-Up-Signal 19 ist vorzugsweise drahtgebunden. Beispielsweise ist das Wake-Up-Signal 19 ein Spannungspuls, insbesondere ein einzelner Spannungspuls, vorzugsweise eine zeitweise Änderung einer Spannung. Das Wake-Up-Signal 19 ist vorzugsweise ein analoges Signal, insbesondere in dem Sinn, dass das Wake-Up-Signal keine digitalen Daten enthält.

Bevorzugt ist die zweite Elektronikanordnung 17 ausgebildet, das Wake-Up-Signal in Ansprechen auf ein über die Drahtlos-Kommunikationseinheit 18 von extern, insbesondere von dem externen Gerät 2, empfangenes Drahtlos-Signal 21 auszugeben. Bevorzugt ist die Drahtlos-Kommunikationseinheit 18 eine Bluetooth-Kommunikationseinheit (beispielsweise ein BLE-Interface, wobei BLE für "Bluetooth Low Energy" steht) und das Drahtlos-Signal ist ein Bluetooth-Signal. Das Drahtlos-Signal 21 wird also insbesondere mittel Bluetooth von dem externen Gerät 2 an die Drahtlos-Kommunikationseinheit 18 übertragen. Alternativ oder zusätzlich kann das Drahtlos-Signal mittels eines anderen Drahtlos-Kommunikationsprotokolls übertragen werden, beispielsweise WLAN oder NFC oder Mobilfunk.

Das Drahtlos-Signal 21 kann beispielsweise dadurch ausgelöst werden, dass der Benutzer an dem externen Gerät 2 eine entsprechende Eingabe vornimmt, beispielsweise mittels eines Touchdisplays 28 und/oder einer Taste des externen Geräts 2. Beispielsweise wählt der Benutzer das Elektrogerät 1 in einer App auf dem externen Gerät 2 aus. In Ansprechen auf die Eingabe des Benutzers - exemplarisch in Ansprechen auf die Auswahl des Elektrogeräts 1 - sendet das externe Gerät 2 das Drahtlos-Signal 21 an die Drahtlos-Kommunikationseinheit 18.

Bevorzugt speichert die zweite Elektronikanordnung 17, insbesondere die Drahtlos-Kommunikationseinheit 18, eine Kennung des Elektrogeräts 1 und sendet diese an das externe Gerät 2, insbesondere das Mobilgerät, beispielsweise auf Anfrage von dem externen Gerät 2 und/oder als Broadcasting. Auf Basis der empfangenen Kennung kann das externe Gerät 2 dem Benutzer erkennbar machen (beispielsweise durch eine entsprechende grafische Darstellung oder durch Text), um was für ein Gerät es sich bei dem Elektrogerät 1 handelt, insbesondere bevor der Benutzer das Elektrogerät 1 an dem externen Gerät 2, insbesondere in der App, auswählt und/oder das Senden des Drahtlos-Signals 21 und/oder des Wake-Up-Signals 19 bewirkt. Dem Benutzer kann auf diese Weise erkennbar gemacht werden, mit welchem Elektrogerät er sich (mittels des externen Geräts 2) verbindet, bevor dieses Elektrogerät aufgeweckt bzw. in den Kommunikations-Modus versetzt wird. Die Speicherung der Kennung in der zweiten Elektronikanordnung 17 erfolgt beispielsweise automatisch, wenn der Akkupack 12 an dem Elektrogerät 1 angebracht wird. Ferner wird die Kennung des Elektrogeräts 1 aus der zweiten Elektronikanordnung 17 gelöscht, wenn der Akkupack 12 von dem Elektrogerät 1 abgezogen wird. Alternativ kann vorgesehen sein, dass die Kennung des Elektrogeräts 1 von dem Akkupack 12 nicht mehr gesendet oder als inaktiv gesendet wird, wenn oder nachdem der Akkupack 12 von dem Elektrogerät 1 abgezogen wird/wurde.

Optional wird das Drahtlos-Signal 21 automatisch von dem externen Gerät 2 an die Drahtlos-Kommunikationseinheit 18 gesendet, beispielsweise in Ansprechen darauf, dass sich die Drahtlos-Kommunikationseinheit 18 in einem Sendebereich des externen Geräts 2 befindet und/oder dass zwischen dem externen Gerät 2 und der Drahtlos-Kommunikationseinheit 18 eine Drahtlos-Kommunikationsverbindung hergestellt wird und/oder gemäß einem insbesondere periodisch ablaufenden Timer.

Bevorzugt steuert die zweite Elektronikanordnung 17 die Schalteinrichtung 14 in Ansprechen auf das Drahtlos-Signal 21, insbesondere das Bluetooth-Signal, mit dem Wake-Up-Signal 19 an.

Gemäß einer möglichen Variante kann die zweite Elektronikanordnung 17 ausgebildet sein, die Ansteuerung der Schalteinrichtung 14 mit dem Wake-Up-Signal 21 selbständig zu triggern - die Bereitstellung des Wake-Up-Signals 21 erfolgt in diesem Fall insbesondere ohne, dass dafür ein Drahtlos-Signal empfangen werden muss. Bei dieser Variante muss die zweite Elektronikanordnung 17 nicht zwingend eine Drahtlos-Kommunikationseinheit aufweisen. Das selbständige Triggern der Bereitstellung des Wake-Up-Signals 21 kann beispielsweise dadurch erfolgen, dass in der zweiten Elektronikanordnung 17 ein Timer abläuft.

Im Folgenden soll näher auf den Kommunikations-Modus eingegangen werden.

Gemäß einer möglichen Ausgestaltung ist der Kommunikations-Modus ein Konfigurations-Modus. Die erste Rechnereinheit 8 ist in dem Kommunikations-Modus konfigurierbar, beispielsweise gemäß einer von extern, insbesondere dem externen Gerät 2, bereitgestellten Konfigurationsinformation. Die Konfigurationsinformation wird insbesondere der ersten Rechnereinheit 8 bereitgestellt, beispielsweise über die zweite Elektronikanordnung 17. Beispielsweise kann in dem Kommunikations-Modus eine Konfiguration der Beleuchtungseinheit 23, eine Einstellung von Bearbeitungsparametern, beispielsweise einer Schnitttiefe, eines Sägeblattdurchmessers und/oder eines Sägeblattwinkels und/oder eine Einstellung einer Laufrichtung des Werkzeugs 6 erfolgen, insbesondere gemäß der Konfigurationsinformation. Die Konfigurationsinformation kann beispielsweise durch den Benutzer mit dem externen Gerät 2 festgelegt werden. Beispielsweise dient die Konfiguration dazu, einen oder mehrere Default-Werte für einen oder mehrere Bearbeitungsparameter festzulegen. Das Elektrogerät 1 ist zweckmäßigerweise ausgebildet, beim Einschalten die eingestellten-Default-Werte als die Bearbeitungsparameter zu verwenden. Die Bearbeitungsparameter umfassen beispielsweise die vorgenannte Schnitttiefe, Sägeblattdurchmesser, den Sägeblattwinkel oder die Laufrichtung des Werkzeugs (beispielsweise eines Schraubbits oder Bohrers). Bei der Konfiguration der Beleuchtungseinheit 23 wird beispielsweise eine Leuchtstärke und/oder eine Nachleuchtdauer der Beleuchtungseinheit 23 eingestellt. Bei einer Ausgestaltung des Elektrogeräts 1 als Exoskelett kann im Kommunikations-Modus beispielsweise eine Stärke einer Unterstützungskraft und/oder ein Winkel, bei dem die Unterstützungskraft bereitgestellt wird, konfiguriert werden.

Optional ist die erste Rechnereinheit 8 ausgebildet, im Kommunikations-Modus Kommunikationsdaten auszutauschen, in einen Speicher (beispielsweise den Speicher 9) zu schreiben und/oder ein Update, beispielsweise ein Firmware-Update durchzuführen. Die Kommunikationsdaten umfassen insbesondere Telemetriedaten und/oder Betriebsdaten des Elektrogeräts 1. Die Kommunikationsdaten werden beispielsweise im Kommunikations-Modus von der ersten Rechnereinheit 8 über die Drahtlos-Kommunikationseinheit 18 an das externe Gerät 2, insbesondere das Mobilgerät und/oder den Cloud-Server übertragen. Ferner können die Kommunikationsdaten im Kommunikations-Modus von dem externen Gerät 2 über die Drahtlos-Kommunikationseinheit 18 an die erste Rechnereinheit 8 übertragen werden.

Zweckmäßigerweise verfügt das Elektrogerät über einen Antriebs-Modus, in dem die Antriebseinrichtung 3 aktiviert ist und eine Antriebskraft und/oder Antriebsbewegung bereitstellt. Der Antriebs-Modus ist beispielsweise der normale aktive Modus des Elektrogeräts 1, in dem die Antriebseinrichtung 3 läuft und einen Antrieb (beispielsweise des Werkzeugs 6) bereitstellt. Beispielsweise versetzt die Antriebseinrichtung im Antriebs-Modus das Werkzeug 6 in eine Bearbeitungsbewegung, die insbesondere zum Abtrag von Material eines Werkstücks dient. Im Antriebs-Modus ist der Schalter 15 geschlossen, so dass die erste Rechnereinheit 8 mit Strom versorgt wird. Im Antriebs-Modus steuert die erste Rechnereinheit 8 (unter Verwendung ihrer Steuerungssoftware) die Leistungselektronik 5 derart an (beispielsweise über eine Treibereinheit 39), dass die Leistungselektronik 5 den Elektromotor 4 mit Strom aus dem Akku 13 versorgt. Exemplarisch kann das Elektrogerät 1 (insbesondere ausschließlich) über eine Betätigung der Bedieneinrichtung 22, insbesondere des Antriebs-Modus-Bedienelements 24, von dem Aus-Modus in den Antriebs-Modus versetzt werden.

Bevorzugt ist im Kommunikations-Modus die Antriebseinrichtung 3 nicht aktiviert und es wird keine Antriebskraft und/oder keine Antriebsbewegung, insbesondere des Werkzeugs 6, bereitstellt. Die Antriebseinrichtung 3 ist im Kommunikations-Modus insbesondere dadurch nicht aktiviert oder nicht aktivierbar, dass eine Bestromung der Antriebseinrichtung 3 gesperrt ist. Der Zustand, in dem die Antriebseinrichtung 3 gesperrt ist, soll auch als Sperr-Zustand bezeichnet werden. Beispielsweise ist die erste Rechnereinheit 8 ausgebildet, im Kommunikations-Modus, insbesondere im Sperr-Zustand, die Antriebseinrichtung 3 (insbesondere die Leistungselektronik 5) so anzusteuern, dass die Antriebseinrichtung 3 (insbesondere der Elektromotor 4) stromlos bleibt. Zweckmäßigerweise sind im Kommunikations-Modus, insbesondere im Sperr-Zustand, Ansteuerungen der Antriebseinrichtung 3 (insbesondere die Leistungselektronik 5), die zu einer Bestromung der Antriebseinrichtung 3 (insbesondere des Elektromotors 4) führen, gesperrt, insbesondere mittels Software. Die Antriebseinrichtung 3 ist somit funktionslos geschaltet. Beispielsweise ist die Treibereinheit 39 im Kommunikations-Modus, insbesondere im Sperr-Zustand, nicht ansteuerbar, um den Motor 4 mittels der Leistungselektronik 5 zu betreiben. Alternativ oder zusätzlich kann im Kommunikations-Modus, insbesondere im Sperr-Zustand, die Antriebseinrichtung 3 dadurch funktionslos geschaltet sein, dass eine Stromzufuhr an die Antriebseinrichtung 3 unterbrochen ist, beispielsweise mittels eines Schalters.

Bevorzugt kann das Elektrowerkzeug so ausgebildet sein, dass das Elektrogerät 1 im Kommunikations-Modus, insbesondere im Sperr-Zustand, über die Bedieneinrichtung 22 nicht in den Antriebs-Modus versetzbar ist. Beispielsweise ist die Bedieneinrichtung 22 im Kommunikations-Modus, insbesondere im Sperr-Zustand, gesperrt, so dass das Elektrogerät 1 im Kommunikations-Modus nicht über die Bedieneinrichtung 22, insbesondere nicht über das Antriebs-Modus-Bedienelement 24, in den Antriebs-Modus versetzbar ist. Die Sperrung ist beispielsweise dadurch realisiert, dass die Bedieneinrichtung 22 (beispielsweise das Antriebs-Modus-Bedienelement 24) im Kommunikations-Modus, insbesondere im Sperr-Zustand, funktionslos geschaltet ist, beispielsweise durch eine entsprechende softwaremäßige Konfiguration der ersten Rechnereinheit 8. Alternativ ist das Elektrogerät 1 im Kommunikations-Modus über die Bedieneinrichtung 22 (beispielsweise das Antriebs-Modus-Bedienelement 24) in den Antriebs-Modus versetzbar.

Der Sperr-Zustand ist insbesondere ein Zustand, in dem das Elektrogerät 1 nicht in den Antriebs-Modus wechseln kann, selbst wenn eine Anfrage zum Wechsel in den Antriebs-Modus vorliegt, beispielsweise in der ersten Rechnereinheit 8. Das Elektrogerät 1 verfügt zweckmäßigerweise ferner über einen Freigabe-Zustand. Der Freigabe-Zustand ist insbesondere ein Zustand, in dem das Elektrogerät 1 in den Antriebs-Modus wechseln kann, insbesondere in Ansprechen darauf, dass eine Anfrage zum Wechsel in den Antriebs-Modus vorliegt, beispielsweise in der ersten Rechnereinheit 8.

Gemäß einer möglichen Ausgestaltung nimmt das Elektrogerät 1 den Sperr-Zustand standardmäßig ein, wenn die erste Rechnereinheit 8 eingeschaltet wird (durch Bestromung über den ersten Schalter 15). Sofern die erste Rechnereinheit 8 feststellt, dass sie über das Wake-Up-Signal 19 eingeschaltet wurde, behält sie den Sperr-Zustand bei. Sofern die erste Rechnereinheit 8 feststellt, dass sie über das Antriebs-Modus-Bedienelement 24 eingeschaltet wurde, wechselt sie von dem Sperr-Zustand in den Freigabe-Zustand, in dem die Antriebseinrichtung 3 nicht gesperrt ist.

Gemäß einer alternativen Ausgestaltung nimmt das Elektrogerät 1 standardmäßig den Freigabe-Zustand ein, wenn die erste Rechnereinheit 8 eingeschaltet wird (durch Bestromung über den ersten Schalter 15). Im Freigabe-Zustand ist die Antriebseinrichtung 3 nicht gesperrt. Sofern die erste Rechnereinheit 8 feststellt, dass sie über das Wake-Up-Signal 19 eingeschaltet wurde, wechselt sie von dem Freigabe-Zustand in den Sperr-Zustand. Sofern die erste Rechnereinheit 8 feststellt, dass sie über das Antriebs-Modus-Bedienelement 24 eingeschaltet wurde, behält sie den Freigabe-Zustand bei.

Optional unterscheidet die erste Rechnereinheit 8 im Kommunikations-Modus zwischen ersten Aktionen, die (potentiell) den Betrieb des Elektrogeräts 1 beeinträchtigen können, und zweiten Aktionen, die den Betrieb des Elektrogeräts 1 nicht beeinträchtigen. Ein Beispiel für eine erste Aktion ist ein Softwareupdate und ein Beispiel für eine zweite Aktion ist ein Auslesen einer Information aus der ersten Rechnereinheit 8. Bevorzugt befindet sich die erste Rechnereinheit 8 im Kommunikations-Modus standardmäßig im Sperr-Zustand und hält den Sperr-Zustand bei, wenn eine erste Aktion angefordert wird. Wenn eine zweite Aktion angefordert wird, kann die erste Rechnereinheit 8 (insbesondere für die Dauer oder während der Dauer der zweiten Aktion) in den Freigabe-Zustand wechseln. Gemäß einer alternativen Ausgestaltung befindet sich die erste Rechnereinheit 8 im Kommunikations-Modus standardmäßig im Freigabe-Zustand und hält den Freigabe-Zustand bei, wenn eine zweite Aktion angefordert wird. Wenn eine erste Aktion angefordert wird, wechselt die erste Rechnereinheit 8 (insbesondere für die Dauer der ersten Aktion) in den Sperr-Zustand.

Bevorzugt ist das Elektrogerät 1 ausgebildet, in Ansprechen auf einen Ablauf eines Timers und/oder in Ansprechen auf ein Abschalt-Signal von dem Kommunikations-Modus in den Aus-Modus zu wechseln. Der Timer wird beispielsweise von der ersten Rechnereinheit 8 bereitgestellt. Der Timer wird beispielsweise mit jeder Kommunikation der ersten Rechnereinheit 8 zurückgesetzt. Das Abschalt-Signal wird beispielsweise von dem externen Gerät 2 oder der zweiten Elektronikanordnung 17 bereitgestellt.

In der Figur 2 ist das Elektrogerät 1 gemäß einer zweiten Ausführungsform ausgebildet, bei der die zweite Elektronikanordnung 17 Teil des Elektrogerät-Hauptkörpers 11 ist. Bis auf die diskutierten Unterschiede entspricht die zweite Ausführungsform der ersten Ausführungsform, so dass die auf die erste Ausführungsform gerichteten Erläuterungen auch für die zweite Ausführungsform gelten.

Bei der zweiten Ausführungsform umfasst der Elektrogerät-Hauptkörper 11 die zweite Elektronikanordnung 17. Diese im Elektrogerät-Hauptkörper 11 angeordnete zweite Elektronikanordnung 17 soll auch als Hauptkörper-Elektronikanordnung 17a bezeichnet werden. Die Drahlos-Kommunikationseinheit 18 der Hauptkörper-Elektronikanordnung 17a soll auch als Hauptkörper-Drahlos-Kommunikationseinheit 18a bezeichnet werden. Die Hauptkörper-Elektronikanordnung 17a kann beispielsweise als, beispielsweise nachrüstbarer, Einschub ausgeführt sein oder ist fest im Elektrogerät-Hauptkörper 11 verbaut.

Die zweite Elektronikanordnung 17 verfügt über eine eigene, von dem Akku 13 separate Energieversorgung 29, um die für das Wake-Up-Signal 19 und/oder ein Empfangen des Drahtlos-Signals 21 erforderliche Energie bereitzustellen. Die Energieversorgung 29 ist insbesondere ein elektrischer Energiespeicher, beispielsweise ein weiterer Akku oder eine Batterie, beispielsweise eine Knopfzelle. Die Energieversorgung 29 dient dazu, die Drahtlos-Kommunikationseinheit 18 mit Energie zu versorgen, so dass diese das Wake-Up-Signal 19 ausgeben und/oder das Drahtlos-Signal 21 empfangen kann. Die Energieversorgung 29 dient insbesondere nicht dazu, die Antriebseinrichtung 3 mit Energie zu versorgen.

Optional kann bei der zweiten Ausführungsform zudem eine zweite Elektronikanordnung 17 im Akkupack 12 vorhanden sein, wie bei der ersten Ausführungsform. Diese zweite Elektronikanordnung 17 kann in diesem Fall als Akkupack-Elektronikanordnung 17b bezeichnet werden, und ihre Drahtlos-Kommunikationseinheit 18 als Akkupack-Drahtlos-Kommunikationseinheit 18b.

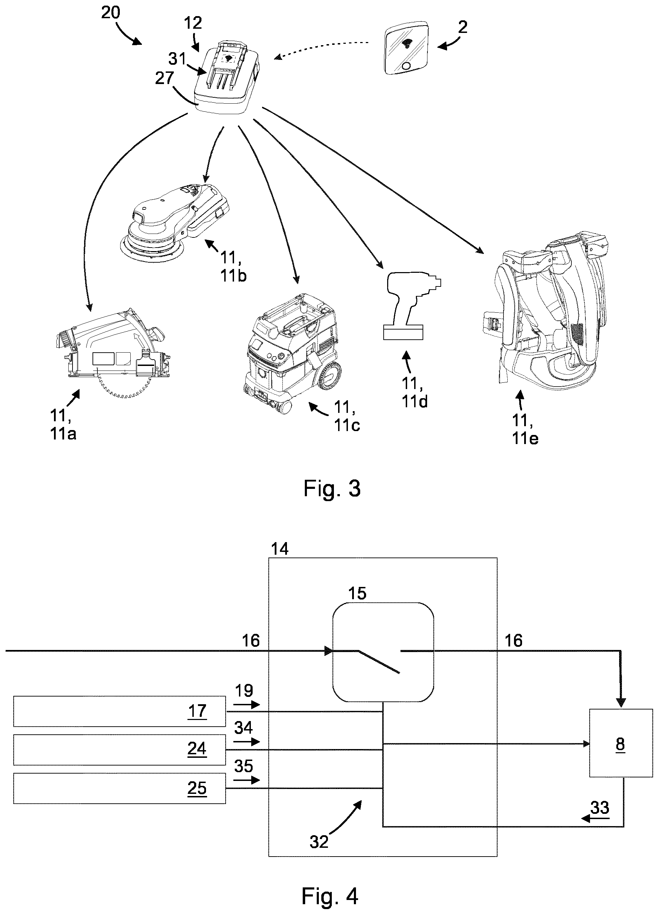

Die Figur 3 zeigt eine Anordnung 20 aus mehreren verschiedenen Elektrogerät-Hauptkörpern 11, dem Akkupack 12 und dem externen Gerät 2. Die Elektrogerät-Hauptkörper 11 umfassen exemplarisch einen Säge-Hauptkörper 11a, einen Schleifer-Hauptkörper 11b, einen Sauger-Hauptkörper 11c, einen Schrauber/Bohrer-Hauptkörper 11d und/oder einen Exoskelett-Hauptkörper 11e. Jeder der gezeigten Elektrogerät-Hauptkörper 11a, 11b, 11c, 11d, 11e stellt für sich genommen eine mögliche exemplarische Ausgestaltung des Elektrogerät-Hauptkörpers 11 dar. Der Akkupack 12 ist mit jedem der Elektrogerät-Hauptkörper 11 kompatibel und kann an jeden der Elektrogerät-Hauptkörper 11 angebracht werden, um den jeweiligen Elektrogerät-Hauptkörper 11 mit Strom zu versorgen und um bei dem jeweiligen Elektrogerät-Hauptkörper 11 die Bereitstellung des Wake-Up-Signals 19 zu ermöglichen.

Der Akkupack 12 verfügt über eine elektromechanische Schnittstelle 31, mit der der Akkupack 12 (insbesondere werkzeuglos) abnehmbar an ein jeweiliges Elektrogerät 1 befestigbar ist. Die elektromechanische Schnittstelle 31 verfügt exemplarisch über eine Eingriffstruktur, die in mechanischen Eingriff mit einer korrespondierend ausgeführten Eingriffstruktur am jeweiligen Elektrogerät 1 in Eingriff gebracht werden kann, um den Akkupack 12 am Elektrogerät 1 zu befestigen. Die elektromechanische Schnittstelle 31 verfügt ferner über mehrere elektrische Kontakte, die insbesondere dazu dienen, das Elektrogerät 1 mit Strom zu versorgen, das Wake-Up-Signal 19 bereitzustellen und/oder eine Kommunikation mit der ersten Rechnereinheit 8 durchzuführen.

Der Säge-Hauptkörper 11a dient dazu (zusammen mit dem Akkupack 12) eine Sägevorrichtung, beispielsweise eine handgeführte Sägevorrichtung, wie z.B. eine Tauchsäge, oder eine halbstationäre Sägevorrichtung, wie z.B. ein Kappsäge oder eine Tischkreissäge, zu bilden. Das von der Antriebseinrichtung 3 angetriebene Werkzeug 6 ist hier ein Sägeblatt.

Der Schleifer-Hauptkörper 11b dient dazu (zusammen mit dem Akkupack 12) eine Schleifervorrichtung, beispielsweise einen Exzenterschleifer, Kantenschleifer oder Trennschleifer, zu bilden. Das Werkzeug 6 ist hier ein Schleifwerkzeug, beispielsweise eine Schleifscheibe.

Der Sauger-Hauptkörper 11c dient dazu (zusammen mit dem Akkupack 12) eine Saugervorrichtung zu bilden, die insbesondere dazu dient, Staub abzusaugen, der bei der Arbeit mit einem Elektrowerkzeug entsteht. Bei dem Sauger-Hauptkörper 11c dient die Antriebseinrichtung 3 insbesondere der Erzeugung eines Unterdrucks und/oder Luftstroms, beispielsweise mittels eines Gebläses.

Der Schrauber/Bohrer-Hauptkörper 11d dient dazu (zusammen mit dem Akkupack 12) eine Schrauber/Bohrer-Vorrichtung zu bilden, beispielsweise einen Akku-Schrauber oder einen Akku-Bohrer. Das Werkzeug 6 ist hier ein Schraubbit oder ein Bohrer.

Der Exoskelett-Hauptkörper 11e dient dazu (zusammen mit dem Akkupack 12) ein Exoskelett zu bilden, das insbesondere am menschlichen Körper getragen werden kann. Das Exoskelett dient vorzugsweise dazu, eine Unterstützungskraft für einen Körperteil, beispielsweise einen Arm, ein Bein oder den Rücken, bereitzustellen. Die Antriebseinrichtung 3 dient beispielsweise zur Bereitstellung der Unterstützungskraft. Die Antriebseinrichtung 3 kann beispielsweise einen Elektromotor umfassen (insbesondere bei einer elektrischen Ausführung der Antriebseinrichtung) und/oder einen Druckluft-Kompressor umfassen (insbesondere bei einer pneumatischen Ausführung des Exoskeletts).

Die Figur 4 zeigt eine exemplarische Ausgestaltung der Schalteinrichtung 14, die hier eine Verbindungsschaltung 32 aufweist. Die Darstellung der Verbindungsschaltung 32 ist rein schematisch. Die Verbindungsschaltung 32 überträgt das Wake-Up-Signal 19 von der zweiten Elektronikanordnung 17 zu dem Schalter 15. Bevorzugt überträgt die Verbindungsschaltung 32 das Wake-Up-Signal 19 ferner zu der ersten Rechnereinheit 8. Anhand des empfangenen Wake-Up-Signals 19 kann die erste Rechnereinheit 8 feststellen, dass sie aufgrund des bereitgestellten Wake-Up-Signals 19 über den Schalter 15 bestromt und damit eingeschaltet wurde, und kann in Ansprechen auf diese Feststellung gezielt den Kommunikations-Modus (anstelle z.B. des Antriebs-Modus) einnehmen. Zweckmäßigerweise wird das Wake-Up-Signal 19 lange genug bereitgestellt, so dass es an der ersten Rechnereinheit 8 noch anliegt - und dementsprechend von der ersten Rechnereinheit 8 empfangen und ausgewertet werden kann - nachdem die erste Rechnereinheit 8 aufgrund des bereitgestellten Wake-Up-Signals 19 über den Schalter 15 bestromt und damit eingeschaltet wurde.

Die Schalteinrichtung 14 ist bevorzugt ferner durch wenigstens ein von dem Wake-Up-Signal 19 verschiedenes, insbesondere nicht von der zweiten Elektronikanordnung 17 stammendes Schließ-Signal ansteuerbar, um den Schalter 15 zu schließen und/oder geschlossen zu halten. Beispiele für Schließ-Signale sind ein von dem Antriebs-Modus-Bedienelement 24 stammendes Antriebs-Modus-Signal 34, ein von dem Beleuchtungseinheit-Bedienelement 25 stammendes Beleuchtungs-Modus-Signal 35, und/oder ein von der ersten Rechnereinheit 8 selbst stammendes Beibehaltungs-Signal 33. Das Wake-Up-Signal 19 stellt ebenfalls ein Schließ-Signal dar. Das Antriebs-Modus-Signal 34 dient dazu, das Elektrogerät 1 in den Antriebs-Modus zu versetzen. Das Beleuchtungs-Modus-Signal 35 dient dazu, das Elektrogerät in einen Beleuchtungs-Modus zu versetzen, in dem die Beleuchtungseinheit 23 eingeschaltet ist und leuchtet und die Antriebseinrichtung 3 vorzugsweise ausgeschaltet ist. Das Beibehaltungs-Signal 33 dient insbesondere dazu, den geschlossenen Zustand des Schalters 15 - und damit die über den Schalter 15 bereitgestellte Stromversorgung - über das Ende der Bereitstellung des Wake-Up-Signals 19 (oder eines der anderen Schließ-Signale) hinaus beizubehalten. Beispielsweise ist die erste Rechnereinheit 8 ausgebildet, in Ansprechen darauf, dass sie durch die Bereitstellung des Wake-Up-Signals 19 (oder eines der anderen Schließ-Signale) mit Strom versorgt und dadurch eingeschaltet wird, selber das Beibehaltungs-Signal 33 bereitzustellen, um zu bewirken, dass die erste Rechnereinheit 8 weiterhin mit Strom versorgt wird und eingeschaltet bleibt.

Die Verbindungsschaltung 32 ist zweckmäßigerweise ausgebildet, eine logische Oder-Verknüpfung zwischen den Schließ-Signalen (in Bezug auf den Schalter 15) bereitzustellen, so dass jedes einzelne Schließ-Signal für sich genommen in der Lage ist, den Schalter 15 zu schließen bzw. geschlossen zu halten.

Die erste Rechnereinheit 8 ist vorzugsweise ausgebildet, in Abhängigkeit davon, durch welches Signal (also welches Schließ-Signal) die Schalteinrichtung 14 angesteuert wurde, um den Schalter 15 zu schließen, das Elektrogerät 1 in einen von verschiedenen möglichen Modi zu versetzen. Insbesondere versetzt die erste Rechnereinheit 8 das Elektrogerät 1 in denjenigen Modus (also exemplarisch den Antriebs-Modus, Kommunikations-Modus oder Beleuchtungs-Modus), der dem Schließ-Signal zugeordnet ist, mit dem der Schalter 15 geschlossen wurde. Die Verbindungsschaltung 32 ist zweckmäßigerweise ausgebildet, jedes der Schließ-Signale der ersten Rechnereinheit 8 zuzuführen, damit die erste Rechnereinheit 8 feststellen kann, durch welches Schließ-Signal der Schalter 15 geschlossen wurde. Insbesondere führt die Verbindungsschaltung 32 die Schließ-Signale zu diesem Zweck auf verschiedenen Signalpfaden an jeweilige, separate Kontakte der ersten Rechnereinheit 8.

Bevorzugt ist die erste Rechnereinheit 8 ausgebildet, in Ansprechen darauf, dass das Schließ-Signal, durch das der Schalter 15 geschlossen wurde, nicht von extern stammt (also insbesondere nicht das Wake-Up-Signal ist), den Freigabe-Zustand einzunehmen, in dem die Antriebseinrichtung 3 nicht gesperrt ist. Insbesondere nimmt die erste Rechnereinheit 8 nur in diesem Fall den Freigabe-Zustand ein.

Gemäß einer möglichen Ausgestaltung führt die Verbindungsschaltung 32 eines der Schließ-Signale (beispielsweise das Wake-Up-Signal 19) nicht zur ersten Rechnereinheit 8. Die erste Rechnereinheit 8 kann schlussfolgern, dass dieses Schließ-Signal den Schalter 15 geschlossen hat, wenn die erste Rechnereinheit 8 eingeschaltet wird und keines der anderen Schließ-Signale vorliegt.

Die Figur 5 zeigt einen exemplarischen (vereinfachten) Schaltplan des Elektrogeräts 1. Das Massepotential ist mit der Abkürzung "GND" gekennzeichnet.

Der Akkupack 12 umfasst einen ersten Spannungsversorgungskontakt 36 und einen zweiten Spannungsversorgungskontakt 37, zwischen denen die Akkuspannung des Akkus 13, beispielsweise 18 V, bereitgestellt wird. Der zweite Spannungsversorgungskontakt 37 liegt exemplarisch auf dem Massepotential "GND". Zwischen den Spannungsversorgungskontakten 36, 37 ist die Leistungselektronik 5 geschaltet, die vorzugsweise einen Umrichter, exemplarisch eine dreiphasige Brückenschaltung, umfasst. Die Leistungselektronik 5 verfügt über drei zueinander parallel geschaltete Zweige, die jeweils zwei Transistoren 38 umfassen. Die Transistoren 38 werden von der ersten Rechnereinheit 8 gemäß der Steuerungssoftware angesteuert (exemplarisch mittels einer Treibereinheit 39), um den Elektromotor 4 zu bestromen und dadurch anzutreiben. Die Treibereinheit 39 kann auch als Teil der Leistungselektronik 5 (bzw. der Antriebseinrichtung 3) angesehen werden. Der Elektromotor 4 ist beispielsweise als bürstenloser Gleichstrommotor ausgeführt.

Der erste Strompfad 16 verläuft, ausgehend von dem ersten Spannungsversorgungskontakt 36, über den exemplarisch als ersten Transistor ausgebildeten Schalter 15 zu einem ersten Spannungsversorgungsanschluss 41 der ersten Rechnereinheit 8. Mit ihrem zweiten Spannungsversorgungsanschluss 42 ist die erste Rechnereinheit 8 an dem zweiten Spannungsversorgungskontakt 37 angeschlossen bzw. liegt auf dem Massepotential.

Die zweite Elektronikanordnung 17 verfügt über einen Wake-Up-Kontakt 43, an dem die zweite Elektronikanordnung 17 das Wake-Up-Signal 19 ausgibt. Vom Wake-Up-Kontakt 43 verläuft ein Wake-Up-Signalpfad, exemplarisch ein Wake-Up-Strompfad, bis zu einem Schaltungsknoten 53, über den der erste Schalter 15 wahlweise geschlossen oder geöffnet werden kann. Exemplarisch ist an den Schaltungskonten 53 ein Steuerungsanschluss eines zweiten Transistors 45 der Schalteinrichtung 14 angeschlossen. Der zweite Transistor 45 steuert den ersten Transistor 15 an, um diesen wahlweise zu schließen oder öffnen, so dass der erste Transistor 15 wahlweise den ersten Strompfad 16 herstellt oder unterbricht. Exemplarisch steuert der zweite Transistor 45 den Steuerungsanschluss des ersten Transistors 15 an.

Optional verläuft ferner ein Signalpfad, exemplarisch ein Strompfad, vom Wake-Up-Kontakt 43 zu einem Wake-Up-Kontakt 51 der ersten Rechnereinheit 8. Der besseren Übersichtlichkeit halber sind die elektrischen Leitungen nicht komplett dargestellt - die mit dem Bezugszeichen 46 versehenen Verbindungspunkte sind elektrisch direkt miteinander verbunden.

Exemplarisch verfügt die zweite Elektronikanordnung 17 über zwei Kommunikationskontakte 47, die elektrisch mit zwei Kommunikationskontakten 52 der ersten Rechnereinheit 8 verbunden sind, um die digitale Kommunikationsverbindung 66 zu bilden, über die die zweite Elektronikanordnung 17 mit der ersten Rechnereinheit 8 kommunizieren kann. Die beiden mit dem Bezugszeichen 48 versehenen Verbindungspunkte sind elektrisch direkt miteinander verbunden und die beiden mit dem Bezugszeichen 49 versehenen Verbindungspunkte sind elektrisch direkt miteinander verbunden. Die Kommunikation erfolgt insbesondere gemäß einem digitalen Kommunikationsprotokoll, beispielsweise gemäß I²C. Die erste Rechnereinheit 8 kann über die zweite Elektronikanordnung 17 mit extern kommunizieren, beispielsweise mit dem externen Gerät 2, exemplarisch dem Mobilgerät und/oder dem Cloud-Server, insbesondere zum Austausch der Kommunikationsdaten und/oder der Konfigurationsinformation.

Die Spannungsversorgungskontakte 36, 37, der Wake-Up-Kontakt 43 und/oder die Kommunikationskontakte 47 sind zweckmäßigerweise Teil der elektromechanischen Schnittstelle 31 des Akkupacks 12.

Das Antriebs-Modus-Bedienelement 24 umfasst einen Antriebs-Modus-Schalter 54, über dessen Betätigung das Antriebs-Modus-Signal 34 über einen Antriebs-Modus-Signalpfad an den Schaltungsknoten 53 übermittelt wird, um zu bewirken, dass der erste Schalter 15 geschlossen wird. Der Antriebs-Modus-Schalter 54 ist zweckmäßigerweise zwischen den ersten Spannungsversorgungskontakt 36 und den Schaltungsknoten 53 geschaltet. Optional ist ein Signalpfad vorhanden, über den das Antriebs-Modus-Signal 34 ferner an einen Antriebs-Modus-Kontakt 55 der ersten Rechnereinheit 8 übertragen wird. Dieser Signalpfad verläuft exemplarisch über die mit dem Bezugszeichen 56 versehenen, elektrisch direkt miteinander verbundenen Verbindungspunkte.

Das Beleuchtungseinheit-Bedienelement 25 umfasst einen Beleuchtungseinheit-Schalter 57, über dessen Betätigung das Beleuchtungs-Modus-Signal 35 über einen Beleuchtungs-Modus-Signalpfad an den Schaltungsknoten 53 übermittelt wird, um zu bewirken, dass der erste Schalter 15 geschlossen wird. Der Beleuchtungseinheit-Schalter 57 ist zweckmäßigerweise zwischen den ersten Spannungsversorgungskontakt 36 und den Schaltungsknoten 53 geschaltet. Der gezeigte Verbindungspunkt 58 ist an den ersten Spannungsversorgungskontakt 36 angeschlossen. Die Verbindungspunkte 59 sind direkt miteinander verbunden. Optional ist ein Signalpfad vorhanden, über den das Beleuchtungs-Modus-Signal 35 ferner an einen Beleuchtungs-Modus-Kontakt 62 der ersten Rechnereinheit 8 übertragen wird. Dieser Signalpfad verläuft exemplarisch über die mit dem Bezugszeichen 61 versehenen, elektrisch direkt miteinander verbundenen Verbindungspunkte.

Bevorzugt umfasst die erste Rechnereinheit 8 ferner einen Beibehaltungs-Kontakt 63, um das Beibehaltungs-Signal 33 über einen Beibehaltungs-Signalpfad an den Schaltungsknoten 53 auszugeben. Der Beibehaltungs-Kontakt 63 ist exemplarisch mit dem Verbindungspunkt 64 verbunden.

Die zweite Elektronikanordnung 17 gibt das Wake-Up-Signal 19 am Wake-Up-Kontakt 43 für eine Zeitperiode aus, die beispielsweise wenigstens 5 ms, wenigstens 10 ms oder wenigstens 15 ms beträgt und vorzugsweise maximal 20 ms oder maximal 30 ms beträgt. Zur Bereitstellung des Wake-Up-Signals 19 verändert, insbesondere erhöht, die zweite Elektronikanordnung 17 das elektrische Potential des Wake-Up-Kontakts 43 während der Zeitperiode. Dadurch wird das elektrische Potential am Schaltungsknoten 53 verändert, exemplarisch erhöht, so dass der erste Schalter 15 geschlossen wird und dadurch die erste Rechnereinheit 8 von dem Akku 13 bestromt und somit eingeschaltet wird. In Ansprechen darauf, dass die erste Rechnereinheit 8 eingeschaltet wird, gibt sie an ihrem Beibehaltungs-Kontakt 63 das Beibehaltungs-Signal 33 aus, so dass das elektrische Potential am Schaltungskonten 53 weiterhin verändert, insbesondere erhöht bleibt, nachdem die Zeitperiode abgelaufen ist und das Wake-Up-Signal 19 nicht mehr bereitgestellt wird. Die erste Rechnereinheit 8 erkennt anhand des am Wake-Up-Kontakt 51 empfangenen Wake-Up-Signals 19, dass der Schalter 15 durch das Wake-Up-Signal 19 geschlossen wurde und nimmt dementsprechend den Kommunikations-Modus ein. Gemäß einer alternativen Ausgestaltung (bei der das Wake-Up-Signal 19 nicht der ersten Rechnereinheit 8 zugeführt wird) erkennt die erste Rechnereinheit 8, dass sie kein Schließ-Signal empfangen hat und daher der Schalter 15 durch das Wake-Up-Signal 19 geschlossen wurde, und nimmt dementsprechend den Kommunikations-Modus ein.

Die Figur 6 zeigt einen (vereinfachten) Schaltplan des Elektrogeräts 1 gemäß einer Variante, bei das Elektrogerät 1 über zwei Akkupacks 12 - einen ersten Akkupack 12a und einen zweiten Akkupack 12b - verfügt. In Bezug auf Merkmale, die bereits in der Figur 5 gezeigt sind, sei auf die entsprechenden Erläuterungen zur Figur 5 verwiesen, die in Entsprechung für die Figur 6 gelten. Merkmale, die in der Figur 5 gezeigt sind und in der Figur 6 nicht (z.B. der Beibehaltungs-Kontakt 63 und Beibehaltungs-Signalpfad, oder das Beleuchtungseinheit-Bedienelement 25 und die zugehörigen Merkmale) können trotzdem auch bei der vorliegenden Variante des Elektrogeräts 1 (mit zwei Akkupacks 12) vorhanden sein.

Jeder der Akkupacks 12a, 12b ist wie der bereits erläuterte Akkupack 12 ausgeführt. Die beiden Akkupacks 12a, 12b sind exemplarisch in Reihe geschaltet, um dem Elektrogerät 1 die doppelte Akkuspannung, also beispielsweise 36 V, zur Verfügung zu stellen. Jeder der Akkupacks 12a, 12b verfügt über einen jeweiligen Wake-Up-Kontakt 43 zur Ausgabe eines jeweiligen Wake-Up-Signals 19. Die von den beiden Wake-Up-Kontakten 43 ausgehenden Signalpfade werden hin zum Schaltungsknoten 53 zusammengeführt. Jeder Akkupack 12a, 12b kann selbständig mit seinem jeweiligen Wake-Up-Signal 19 den ersten Schalter 15 schließen. Optional ist ferner von jedem Wake-Up-Kontakt 43 ein jeweiliger, separater Signalpfad zu einem jeweiligen Wake-Kontakt 51a, 51b der ersten Rechnereinheit 8 vorhanden. Die Signalpfade verlaufen über die elektrisch direkt miteinander verbundenen Verbindungspunkte 46a und über die elektrisch direkt miteinander verbundenen Verbindungspunkte 46b.

In dem Wake-Up-Signalpfad für das von dem zweiten Akkupack 12b ausgegebene Wake-Up-Signal ist zweckmäßigerweise ein Spannungsteiler 65 vorhanden, um die elektrische Spannung des Wake-Up-Signals 19 (in Bezug auf das Massepotential) zu verringern. In dem Wake-Up-Signalpfad für das von dem ersten Akkupack 12a ausgegebene Wake-Up-Signal ist zweckmäßigerweise kein entsprechender Spannungsteiler vorhanden. Aufgrund der Reihenschaltung der beiden Akkus 13 ist das elektrische Potential des Wake-Up-Kontakts 43 des zweiten Akkupacks 12b (insbesondere um eine Akkuspannung) höher als das elektrische Potential des Wake-Up-Kontakts 43 des ersten Akkupacks 12a. Um zu erreichen, dass die Wake-Up-Signale der beiden Akkupacks 12a, 12b dennoch ungefähr das gleiche elektrische Potential aufweisen, wenn sie am Schaltungsknoten 53 ankommen, ist für den zweiten Akkupack der Spannungsteiler 65 vorgesehen.

Im Folgenden soll auf ein Verfahren zum Betrieb des Elektrogeräts 1 eingegangen werden. Zweckmäßigerweise befindet sich das Elektrogerät 1 zunächst im Aus-Modus.

Das Verfahren umfasst die Schritte:
- Auswählen des Elektrogeräts 1 in einer App auf einem externen Gerät 2, insbesondere dem Mobilgerät, insbesondere durch einen Benutzer,
- in Ansprechen auf die Auswahl des Elektrogeräts 1, Senden des Drahtlos-Signals 21, insbesondere als Bluetooth-Signal, von dem externen Gerät 2, insbesondere dem Mobilgerät, an die zweite Elektronikanordnung 17, und
- In Ansprechen auf das Drahtlos-Signal 21, Ansteuern der Schalteinrichtung 14 mit dem Wake-Up-Signal 19 durch die zweite Elektronikanordnung 17, um das Elektrogerät von dem Aus-Modus in den Kommunikations-Modus zu versetzen.

Zweckmäßigerweise erfolgt im Kommunikations-Modus eine Kommunikation mit der ersten Rechnereinheit 8. Beispielsweise empfängt die erste Rechnereinheit 8 eine Konfigurationsinformation von dem externen Gerät 2 und führt gemäß der Konfigurationsinformation eine Konfiguration durch.

Optional geht das Elektrogerät 1 wieder automatisch in den Aus-Modus, beispielsweise nach dem Ablauf eines entsprechenden Timers. Das Elektrogerät 1 geht insbesondere dann automatisch in den Aus-Modus, wenn seit der letzten Kommunikation der ersten Rechnereinheit 8 eine vorbestimmte Zeitdauer abgelaufen ist. Der Ablauf dieser vorbestimmten Zeitdauer wird zweckmäßigerweise anhand des Timers festgestellt. Um den Aus-Modus einzunehmen, beendet das Elektrogerät 1 die Bestromung der ersten Rechnereinheit 8. Beispielsweise beendet die erste Rechnereinheit 8 zur Einnahme des Aus-Modus die Bereitstellung des Beibehaltungs-Signals 33, so dass der erste Schalter 15 geöffnet wird und die Bestromung der ersten Rechnereinheit 8 beendet wird.

Zweckmäßigerweise ist während des gesamten Vorgangs, also von dem Anfangs-Zustand, bei dem sich das Elektrogerät 1 im Aus-Modus befindet, bis zur erfolgten Einnahme des Kommunikations-Modus (oder bis zur erfolgten Rückkehr in den Aus-Modus) keine direkte Bedienung des Elektrogeräts 1 (im Sinne einer Betätigung eines Bedienelements des Elektrogeräts 1) durch den Benutzer erforderlich und findet vorzugsweise auch nicht statt.

Zweckmäßigerweise bleibt während des gesamten Vorgangs, also von dem Anfangs-Zustand, bei dem sich das Elektrogerät 1 im Aus-Modus befindet, bis zur erfolgten Einnahme des Kommunikations-Modus (oder bis zur erfolgten Rückkehr in den Aus-Modus) die Antriebseinrichtung 3 nicht-aktiviert. Insbesondere wird die Antriebseinrichtung 3 während des gesamten Vorgangs nicht aktiviert.

Optional wird vor dem Senden des Wake-Up-Signals 19 geprüft, ob die erste Rechnereinheit 8 bereits bestromt wird. Ist das der Fall, kann auf das Senden des Wake-Up-Signals 19 verzichtet werden.

Optional wird vor dem Senden des Wake-Up-Signals 19 geprüft, ob sich das Elektrogerät 1 im Antriebs-Modus befindet. Ist das der Fall, wird auf das Senden des Wake-Up-Signals 19 verzichtet. Vorzugsweise wird dem Benutzer des externen Geräts 2, insbesondere des Mobilgeräts, angezeigt, dass das Elektrogerät 1 sich im Betrieb befindet. Alternativ oder zusätzlich kann vorgesehen sein, dass in der Folge der Kommunikations-Modus nicht eingenommen wird oder es wird oder ein passiver Kommunikations-Modus eingenommen wird, in dem Daten von dem Elektrogerät 1 ausgelesen werden können.

## Patentansprüche

1. Elektrogerät (1), das als Elektrowerkzeug, Sauger oder Exoskelett ausgebildet ist, umfassend:
- eine Antriebseinrichtung (3),
- eine erste Elektronikanordnung (7), die eine erste Rechnereinheit (8) zur Ausführung einer Steuerungssoftware zur Steuerung der Antriebseinrichtung (3) umfasst,
- einen Akku (13) zur Energieversorgung wenigstens der ersten Rechnereinheit (8),
- eine Schalteinrichtung (14) mit einem Schalter (15), über den ein erster Strompfad (16) von dem Akku (13) zu der ersten Rechnereinheit (8) verläuft,
- eine zweite Elektronikanordnung (17), über die die Schalteinrichtung (14) mit einem Wake-Up-Signal (19) ansteuerbar ist, um das Elektrogerät (1) von einem Aus-Modus, in dem der Schalter (15) geöffnet und dadurch die erste Rechnereinheit (8) stromlos geschaltet ist, in einen Kommunikations-Modus zu versetzen, in dem der Schalter (15) geschlossen ist und dadurch die erste Rechnereinheit (8) mit Strom versorgt wird, so dass die erste Rechnereinheit (8) kommunikativ ansprechbar ist.

2. Elektrogerät (1) nach Anspruch 1, wobei die zweite Elektronikanordnung (17) eine Drahtlos-Kommunikationseinheit (18) aufweist und ausgebildet ist, das Wake-Up-Signal (19) in Ansprechen auf ein über die Drahtlos-Kommunikationseinheit (18) von extern, insbesondere von einem externen Gerät (2), empfangenes Drahtlos-Signal (21) auszugeben.

3. Elektrogerät (1) nach Anspruch 2, wobei die Drahtlos-Kommunikationseinheit (18) eine Bluetooth-Kommunikationseinheit ist und das Drahtlos-Signal ein Bluetooth-Signal ist.

4. Elektrogerät (1) nach einem voranstehenden Anspruch, wobei die zweite Elektronikanordnung (17) ausgebildet ist, die Ansteuerung der Schalteinrichtung (14) mit dem Wake-Up-Signal (19) selbständig zu triggern.

5. Elektrogerät (1) nach einem voranstehenden Anspruch, wobei die erste Rechnereinheit (8) in dem Kommunikations-Modus konfigurierbar ist, insbesondere zur Konfiguration einer Beleuchtungseinheit (23), zur Einstellung von Bearbeitungsparametern, beispielsweise einer Schnitttiefe und/oder eines Sägeblattdurchmessers und/oder eines Sägeblattwinkels und/oder zur Einstellung einer Laufrichtung eines Werkzeugs (6) des Elektrogeräts (1).

6. Elektrogerät (1) nach einem voranstehenden Anspruch, umfassend einen Elektrogerät-Hauptkörper (11) und einen abnehmbar am Elektrogerät-Hauptkörper (11) angebrachten Akkupack (12), wobei der Elektrogerät-Hauptkörper (11) die Antriebseinrichtung (3) und die erste Elektronikanordnung (7) umfasst und der Akkupack (12) den Akku (13) und die zweite Elektronikanordnung (17) umfasst.

7. Elektrogerät (1) nach einem der Ansprüche 1 bis 5, umfassend einen Elektrogerät-Hauptkörper (11) und einen abnehmbar am Elektrogerät-Hauptkörper (11) angebrachten Akkupack (12), wobei der Elektrogerät-Hauptkörper (11) die Antriebseinrichtung (3), die erste Elektronikanordnung (7) und die zweite Elektronikanordnung (17) umfasst und der Akkupack (12) den Akku (13) umfasst.

8. Elektrogerät (1) nach einem voranstehenden Anspruch, wobei das Elektrogerät (1) über einen Antriebs-Modus verfügt, in dem die Antriebseinrichtung (3) aktiviert ist und eine Antriebskraft und/oder Antriebsbewegung bereitstellt, wobei im Kommunikations-Modus die Antriebseinrichtung (3) nicht aktiviert ist und keine Antriebskraft und/oder keine Antriebsbewegung bereitstellt oder bereitstellen kann, wobei die Antriebseinrichtung (3) vorteilhafterweise im Kommunikations-Modus dadurch nicht aktiviert ist, dass eine Bestromung der Antriebseinrichtung (3) gesperrt ist.

9. Elektrogerät (1) nach Anspruch 8, umfassend eine Bedieneinrichtung (22), über die ein Benutzer das Elektrogerät (1) einschalten kann, um das Elektrogerät (1) in den Antriebs-Modus zu versetzen, oder über die der Benutzer eine Beleuchtungseinheit (23) des Elektrogeräts (1) einschalten kann, wobei das Elektrogerät (1) über die zweite Elektronikanordnung (17) in den Kommunikations-Modus versetzbar ist, ohne dass dafür eine Betätigung der Bedieneinrichtung (22) erforderlich ist.

10. Elektrogerät (1) nach einem voranstehenden Anspruch, wobei der Akku (13) zur Energieversorgung der Antriebseinrichtung (3) dient.

11. Elektrogerät (1) nach einem voranstehenden Anspruch, wobei die erste Rechnereinheit (8) ausgebildet ist, im Kommunikations-Modus Kommunikationsdaten auszutauschen, in einen Speicher (9) zu schreiben und/oder ein Update durchzuführen, wobei die Kommunikationsdaten insbesondere Telemetriedaten und/oder Betriebsdaten des Elektrogeräts (1) umfassen.

12. Elektrogerät (1) nach einem voranstehenden Anspruch, wobei die Schalteinrichtung (14) ferner durch wenigstens ein von dem Wake-Up-Signal (19) verschiedenes, insbesondere nicht von der zweiten Elektronikanordnung (17) stammendes Schließ-Signal ansteuerbar ist, um den Schalter (15) zu schließen, und die erste Rechnereinheit (8) ausgebildet ist, in Abhängigkeit davon, durch welches Signal die Schalteinrichtung (14) angesteuert wurde, um den Schalter (15) zu schließen, das Elektrogerät (1) in verschiedene Modi zu versetzen.

13. Elektrogerät (1) nach einem voranstehenden Anspruch, wobei die zweite Elektronikanordnung (17) über eine eigene, von dem Akku (13) separate Energieversorgung (29) verfügt, um die für das Wake-Up-Signal (19) und/oder ein Empfangen eines/des Drahtlos-Signals (21) erforderliche Energie bereitzustellen.

14. Elektrogerät (1) nach einem voranstehenden Anspruch, wobei das Elektrogerät (1) ausgebildet ist, in Ansprechen auf einen Ablauf eines Timers und/oder in Ansprechen auf ein Abschalt-Signal von dem Kommunikations-Modus in den Aus-Modus zu wechseln.

15. Verfahren zum Betrieb eines Elektrogeräts (1) nach einem der voranstehenden Ansprüche, umfassend die Schritte:
- mittels der zweiten Elektronikanordnung (17), Ansteuern der Schalteinrichtung (14) mit dem Wake-Up-Signal (19), um das Elektrogerät (1) von dem Aus-Modus in den Kommunikations-Modus zu versetzen,
- im Kommunikations-Modus, Durchführen einer Kommunikation mit der ersten Rechnereinheit (8), und vorteilhaft weiter umfassend die Schritte:
- Auswählen des Elektrogeräts (1) in einer App auf einem externen Gerät (2), insbesondere einem Mobilgerät,
- in Ansprechen auf die Auswahl des Elektrogeräts (1), Senden eines Drahtlos-Signals (21), insbesondere eines Bluetooth-Signals, an die zweite Elektronikanordnung (17), wobei die zweite Elektronikanordnung (17) die Schalteinrichtung (14) in Ansprechen auf das Drahtlos-Signal (21), insbesondere das Bluetooth-Signal, mit dem Wake-Up-Signal (19) ansteuert.
